# EUROPÄISCHE PATENTANMELDUNG

(11) **EP 1 480 156 A2**
(43) Veröffentlichungstag der Anmeldung: **24.11.2004**
(21) Anmeldenummer: 04008620.9
(22) Anmeldetag: 08.04.2004
(51) Int. Cl.: G06K 7/00

(54) **Vorrichtung zur Ausstrahlung von HF-Signalen, insbesondere in einem Identifikationssystem**

(30) Priorität: 22.05.2003 DE 10323214
(71) Anmelder: SIEMENS AKTIENGESELLSCHAFT, 80333 München (DE)
(72) Erfinder: Meyer, Martin, 90425 Nürnberg (DE)

(57) **Zusammenfassung**

Die Erfindung betrifft eine Vorrichtung zur Ausstrahlung von HF-Signalen, welche einen Modulator zur Amplitudenumtastung von Eingangssignalen, einen Klasse E-Verstärker und eine Sendeantenne aufweist.

## Beschreibung

Die Erfindung betrifft eine Vorrichtung zur Ausstrahlung von HF-Signalen.

Kontaktlose Identifikationssysteme arbeiten auf Basis von berührungslosen Übertragungstechniken. Systeme dieser Art werden beispielsweise zur Identifikation von Personen oder von bewegten Gütern wie beispielsweise Transportmitteln eingesetzt. Die notwendigen Daten werden dazu von einem Schreib-/Lesegerät über eine berührungslose Datenübertragungsstrecke übertragen, beispielsweise über eine Luftschnittstelle, zu einem mobilen Datenträger und auch in Gegenrichtung. Dabei gestattet die berührungslose Identtechnik auch eine Erfassung von Daten während einer Vorbeibewegung des Datenträgers am Schreib-/Lesegerät, ohne dass der Datenträger in das Schreib-/Lesegerät eingeschoben oder durch dieses gezogen werden muss. Datenträger dieser Art werden unter anderem auch als Fahrkarten mit einem elektronisch nachladbaren Guthaben verwendet, wobei der jeweilige Betrag bei einer Benutzung des Verkehrsmittels automatisch abgebucht wird.

Aus der DE 32 42 551 C2 ist eine Anordnung zum Identifizieren eines Objektes bekannt. Diese Anordnung weist eine Identifizierungseinrichtung auf, die elektromagnetische Energie in Form von elektromagnetischen Wellen über eine Antenne aufweisende Sendeeinrichtung abstrahlt. Weiterhin enthält die Anordnung einen auf dem zu identifizierenden Objekt angeordneten Codeträger, der über eine Empfangseinrichtung die abgestrahlte Energie aufnimmt. Die Empfangseinrichtung des Codeträgers ist dem Code entsprechend zwischen verschiedenen Belastungen umschaltbar oder einstellbar, so dass sich mit der geänderten Belastung im Codeträger das elektromagnetische Feld an der Energie abstrahlenden Sendeeinrichtung der Identifikationseinrichtung entsprechend ändert, und dass die sich aus der Feldänderung ergebende niederfrequente Strom- oder Spannungsänderung hinsichtlich des darin enthaltenen Codes ausgewertet wird.

Aus der DE 198 44 631 A1 ist ein System zur Überwachung, Steuerung, Verfolgung und zum Handling von Objekten bekannt. Dieses bekannte System weist mindestens ein stationäres oder mobiles Schreib-/Lesegerät und mindestens einen direkt am Objekt angebrachten mobilen Datenträger auf. Der Datenträger enthält Mittel zur Speicherung von Identifikationsdaten und objektspezifischen Daten sowie Mittel zur drahtlosen Übertragung der Daten an das Schreib-/Lesegerät. Ferner umfasst der mobile Datenträger Mittel zur Erfassung und Speicherung von Umweltdaten und/oder anderen Messwerten. Die Identifikationsdaten, objektspezifischen Daten und/oder Umweltdaten bzw. Messwerte werden entweder automatisch im Broadcastverfahren ausgesendet oder auf Anfrage des Schreib-/Lesegerätes an dieses übermittelt. Das Schreib-/Lesegerät enthält einen Mikroprozessor, einen Speicher, eine Ein-/Ausgabeeinheit, eine Schnittstelle, eine Sende-/Empfangseinheit und eine Stromversorgung.

Aus der EP 0 171 433 B1 ist ein Identifikationssystem bekannt, welches zumindest einen Ausleser/Erreger und einen passiven integrierten Transponder aufweist. Der Ausleser/Erreger enthält einen Erreger, einen Signalaufbereiter sowie Demodulations- und Detektionskreise. Der Erreger besteht aus einer Wechselstromsignalquelle und einem Energieverstärker, welcher einer Erreger-/Abfragerspule über einen Kondensator ein Erregersignal mit hoher Stromstärke und Spannung zuleitet. Die Abfragerspule und der Kondensator sind derart gewählt, dass bei der Anregungssignalfrequenz Resonanz vorliegt, so dass die an der Spule anliegende Spannung wesentlich größer ist als die am Ausgang des Verstärkers vorliegende Spannung. Der Erreger weist einen kristallgesteuerten Oszillator auf, dessen frequenzgeteiltes Ausgangssignal zur Ansteuerung eines Hochenergieschalttreibers verwendet wird, der seinerseits die Erreger-/Abfragerspule treibt. Der Hochenergieschalttreiber enthält zwei MOSFETs, die in einer Gegentaktanordnung miteinander verbunden sind. Die Ausgänge der MOSFETs sind über ein Widerstandsnetzwerk und Koppelkondensatoren mit der Erreger-/Abfragerspule verbunden, wobei das Widerstandsnetzwerk zur Reduzierung der Verluste der MOSFETs während der Schaltübergänge vorgesehen ist.

Weiterhin sind bereits sogenannte Klasse E-Verstärker bekannt. Diese weisen einen Transistor auf, der als Schalter arbeitet. Um die Verlustleistung zu reduzieren, bemüht man sich stets, die Schaltzeit des Transistors möglichst kurz zu halten. Das an den Transistor angeschlossene Lastnetzwerk ist dazu vorgesehen, den Spannungs- und den Stromverlauf so zu gestalten, dass niemals gleichzeitig eine hohe Spannung und ein hoher Strom im Transistor auftreten.

Der Erfindung liegt die Aufgabe zugrunde, eine in einem Identifikationssystem verwendbare Vorrichtung zur Ausstrahlung von HF-Signalen anzugeben, die mit einer reduzierten Anzahl von Bauelementen auskommt.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass die beanspruchte Vorrichtung zur Ausstrahlung von HF-Signalen mit einer im Vergleich zum Stand der Technik reduzierten Anzahl von Bauelementen auskommt. Weiterhin arbeitet die beanspruchte Vorrichtung mit einem hohen Wirkungsgrad und benötigt nur eine geringe Versorgungsspannung.

In vorteilhafter Weise kann durch eine geeignete Ansteuerung der parallel geschalteten Tristate-Ausgänge einer digitalen integrierten Schaltung jeder einzelne dieser Ausgänge zugeschaltet, abgeschaltet und in einen hochohmigen Zustand gebracht werden. Sind beispielsweise alle Tristate-Ausgänge zugeschaltet, dann fließt ein hoher Strom durch die Sendespule bzw. Sendeantenne. Sind einige der Tristate-Ausgänge hochohmig, dann fließt ein geringerer Strom durch die Sendespule bzw. Sendeantenne. Damit ergibt sich eine Amplitudenumtastung des durch die Sendeantenne fließenden Stromes und des durch diesen erzeugten Magnetfeldes.

Um möglichst kurze fallende Flanken der Hüllkurve zu erhalten, können während der ersten Zeit einer Austastung alle Tristate-Ausgänge ausgeschaltet werden, so dass der Schalttransistor des Klasse E-Verstärkers sicher sperrt. Kürzere Anstiegszeiten der Flanken der Hüllkurve kann man entsprechend durch eine Aktivierung zusätzlicher Ausgänge erreichen.

Beschaltet man die Tristate-Ausgänge zusätzlich mit in Reihe dazu geschalteten Widerständen, dann kann man eine unterschiedliche Gewichtung erzielen und dadurch einen noch größeren Bereich der möglichen Gateströme des MOSFETs des Klasse E-Verstärkers.

Eine Verwendung einer Spule des Klasse E-Verstärkers als Sendeantenne, wie es im Anspruch 9 angegeben ist, bewirkt eine weitere Verringerung der Anzahl der benötigten Bauelemente.

Alternativ dazu kann - wenn dies der jeweils vorliegende Anwendungsfall erfordert - die Sendeantenne vom Klasse E-Verstärker entfernt angeordnet und mit diesem über eine Leitung und ein Anpassnetzwerk verbunden sein. Das Anpassnetzwerk hat dabei die Aufgabe einer Anpassung des Verstärkers und der Antenne an den Ohmschen Widerstand der Leitung.

Eine Vorrichtung gemäß der Erfindung kann in vorteilhafter Weise bei einem Identifkationssystem verwendet werden und kann bei diesem Bestandteil des Schreiblesegerätes sein, von welchem aus modulierte Datensignale an einen mobilen Datenträger übertragen werden.

Weitere vorteilhafte Eigenschaften der Erfindung ergeben sich aus deren beispielhafter Erläuterung anhand der Figuren. Es zeigt:
- Figur 1: ein Blockschaltbild eines Identifikationssystems, bei welchem die Erfindung anwendbar ist,
- Figur 2: ein Schaltbild eines ersten Ausführungsbeispiels für eine Vorrichtung zur Ausstrahlung von HF-Signalen gemäß der Erfindung,
- Figur 3: ein Schaltbild eines zweiten Ausführungsbeispiels für eine Vorrichtung zur Ausstrahlung von HF-Signalen gemäß der Erfindung,
- Figur 4: ein Schaltbild eines dritten Ausführungsbeispiels für eine Vorrichtung zur Ausstrahlung von HF-Signalen gemäß der Erfindung und
- Figur 5: ein Schaltbild eines vierten Ausführungsbeispiels für eine Vorrichtung zur Ausstrahlung von HF-Signalen gemäß der Erfindung.

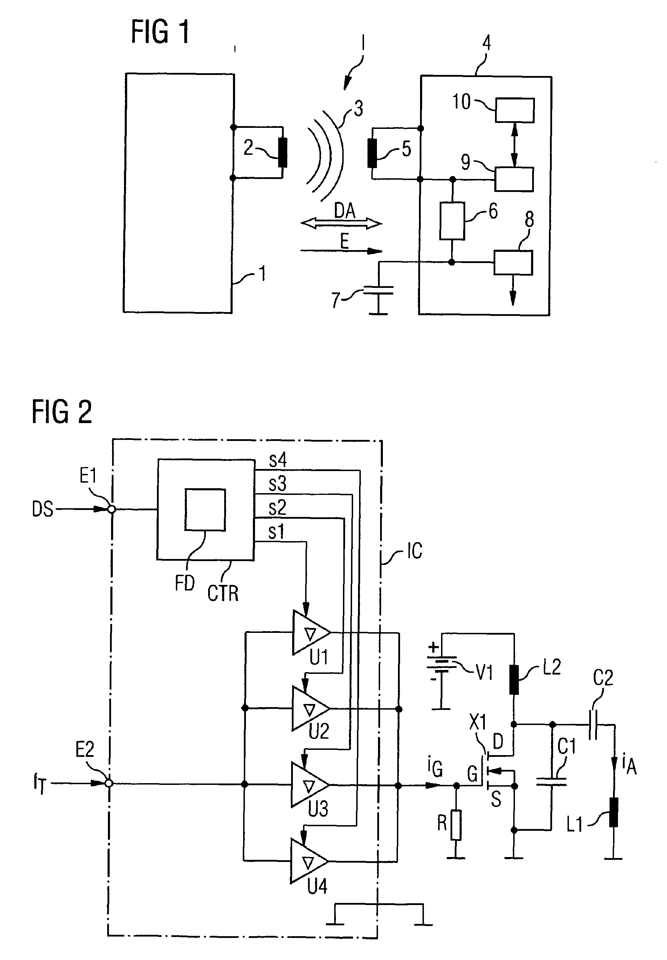

Die Figur 1 zeigt ein Blockschaltbild eines Identifikationssystems I, bei welchem die Erfindung anwendbar ist.

Das dargestellte System weist ein Schreib-/Lesegerät 1 und einen mobilen Datenträger 4 auf. Zwischen dem Schreib-/Lesegerät 1 und dem mobilen Datenträger 4 erfolgt über eine Luftübertragungsstrecke 3 ein bidirektionaler Austausch von Daten DA. Weiterhin wird vom Schreib-/Lesegerät über die Luftübertragungsstrecke 3 auch Energie E zum mobilen Datenträger 4 übertragen, wobei diese Übertragung von Energie in Zeitintervallen vorgenommen wird, in denen kein Austausch von Daten erfolgt. Die Übertragung von Daten und Energie erfolgt nach dem Prinzip der induktiven Kopplung, wobei HF-Signale übertragen werden. Zu diesem Zweck ist das Schreib-/Lesegerät 1 mit einer Spule 2 und der mobile Datenträger 4 mit einer Spule 5 versehen, die jeweils als Antenne fungieren.

Im mobilen Datenträger 4 wird die übertragene Energie über einen Gleichrichter 6 einem als Kondensator realisierten Energiespeicher zugeleitet. Die am Kondensator 7 anliegende unstabilisierte Gleichspannung wird einem Spannungsstabilisator 8 zugeleitet, an dessen Ausgang die zur Versorgung des mobilen Datenträgers 4 benötigte stabilisierte Gleichspannung zur Verfügung gestellt wird.

Weiterhin wird im mobilen Datenträger 4 das von der Spule 5 empfangene Signal einer Auswerteeinheit 9 zugeführt, in welcher die übertragenen Daten ausgewertet und dann an einen Speicher 10 weitergeleitet werden. Die Auswerteeinheit 9 ist auch zur Generierung von Antwortsignalen vorgesehen, die über die Spule 5 ausgesendet und an das Schreib-/Lesegerät 1 übertragen werden.

Die vorliegende Erfindung betrifft insbesondere die beim gezeigten System verwendete Vorrichtung zur Ausstrahlung von HF-Signalen vom Schreib-/Lesegerät 1 an den mobilen Datenträger 4.

Die Figur 2 zeigt ein Schaltbild eines ersten Ausführungsbeispiels für eine Vorrichtung zur Ausstrahlung von HF-Signalen gemäß der Erfindung. Die dargestellte Vorrichtung weist einen Modulator zur Amplitudenumtastung von Eingangssignalen, einen Klasse E-Verstärker und eine Sendeantenne auf, wobei der Klasse E-Verstärker und die Sendeantenne Bestandteil des Modulators sind und wobei weiterhin die Sendeantenne Bestandteil des Klasse E-Verstärkers ist.

Der Modulator weist eine digitale integrierte Schaltung IC auf, die einen ersten Eingangsanschluss E1 und einen zweiten Eingangsanschluss E2 hat. Dem ersten Eingangsanschluss E1 wird ein zu modulierendes Datensignal DS zugeführt, welches aus einer Folge von LOW- und HIGH-Pegeln bzw. einer Folge von Nullen und Einsen besteht. An den zweiten Eingangssignalanschluss E2 wird ein Trägerfrequenzsignal f_{T} angelegt, dessen Frequenz beispielsweise 13,56 MHz beträgt.

Das Trägerfrequenzsignal f_{T} wird innerhalb der digitalen integrierten Schaltung IC an vier parallel zueinander geschaltete Gatter U1, U2, U3, U4 geleitet, welche Tristate-Ausgänge der digitalen integrierten Schaltung IC bilden. Die Steuersignale s1, s2, s3, s4 für die Gatter U1, U2, U3, U4 werden von einer Steuereinheit CTR zur Verfügung gestellt, an deren Eingang das zu modulierende Datensignal DS anliegt. Die Steuereinheit CTR erzeugt die Steuersignale s1, s2, s3, s4 in Abhängigkeit von den zu modulierenden Datensignalen DS derart, dass mehr oder weniger dieser Gatter durchlässig sind, wodurch ein jeweils gewünschter Gatestrom i_{G} in den Gateanschluss G eines Schalttransistors X1 fließt.

Der Schalttransistor X1 ist Bestandteil eines Klasse E-Verstärkers und als Feldeffekttransistor realisiert. Der Sourceanschluss S des Feldeffekttransistors X1 ist mit Masse verbunden. Weiterhin ist der Sourceanschluss S über einen Kondensator C1 an den Drainanschluss D des Feldeffekttransistors X1 angeschlossen. Der Drainanschluss D ist ferner über eine Spule L2 mit einer Gleichspannungsquelle V1 verbunden, welche eine Versorgungsgleichspannung zur Verfügung stellt, die kleiner als 6V ist. Vorzugsweise stellt die Gleichspannungsquelle V1 eine Versorgungsgleichspannung von 3,3V zur Verfügung. Diese im Vergleich zu bekannten Lösungen niedrige Versorgungsgleichspannung reicht bei einer Vorrichtung gemäß der Erfindung aus, um HF-Signale von der Schreib-/Leseeinheit eines Identifikationssystems zum mobilen Datenträger zu übertragen. Das Ausstrahlen dieser HF-Signale erfolgt über eine Spule L1, die beim gezeigten Ausführungsbeispiel die Sendeantenne bildet und gleichzeitig Bestandteil des Klasse E-Verstärkers ist. Die Spule ist an den Drainanschluss D des Feldeffekttransistors X1 über einen Kondensator C2 angeschlossen. Der andere Anschluss der Spule L1 liegt auf Masse.

Bei der in der Figur 2 dargestellten Vorrichtung werden die zu modulierenden Eingangssignale DS einer Amplitudenumtastung unterworfen. Dies erfolgt unter Verwendung mehrerer parallel geschalteter Tristate-Ausgänge eines digitalen integrierten Schaltkreises IC. Diese Tristate-Ausgänge sind einzeln zuschaltbar, abschaltbar oder in einen hochohmigen Zustand schaltbar. Dies erfolgt in Abhängigkeit von den Eingangssignalen mittels einer Steuereinheit CTR, welche Steuersignale für die Tristate-Ausgänge bereitstellt. Diese Ausgänge schalten mit der Trägerfrequenz den MOS-Feldeffekttransistor X1 eines Klasse E-Verstärkers. Dadurch wird in der Sendeantenne L1 ein nahezu harmonischer Strom konstanter Amplitude erzeugt.

Diese konstante Amplitude wird auch durch die Geschwindigkeit des Schaltens des Transistors X1 bestimmt. Je höher diese Geschwindigkeit ist, desto geringer sind die Verluste im Transistor und desto höher ist der durch die Sendeantenne L1 fließende Strom i_{A}.

Zum Schalten des Transistors X1 wird dessen Gate-Kapazität umgeladen. Diese Umladung erfolgt durch den Gatestrom i_{G}, dessen Größe auch vom Innenwiderstand des verwendeten Treibers abhängt. Durch eine Variation des Gatestroms i_{G} werden die Schaltzeiten verändert und dadurch auch der durch die Sendeantenne fließende Strom i_{A}.

Ein niedriger Innenwiderstand kann durch eine gleichzeitige Einschaltung mehrerer der Tristate-Ausgänge der digitalen integrierten Schaltung IC erreicht werden. Eine Erhöhung des Innenwiderstandes kann durch ein Umschalten einiger dieser Tristate-Ausgänge in einen hochohmigen Zustand erreicht werden. Die übrigen Ausgänge arbeiten weiter im Trägerfrequenztakt. Dadurch sinkt der durch die Sendeantenne L1 fließende Strom i_{A}. Die Umschaltung in den hochohmigen Zustand erfolgt im Datentakt mit der Bitfolge der zu modulierenden Eingangssignale, bei denen es sich um einen digitalen Bitstrom handelt.

Sind alle Gatter U1, U2, U3, U4 zugeschaltet, dann fließt ein hoher Strom i_{A} durch die Sendeantenne L1. Sind einige dieser Gatter hochohmig, dann ist der Strom i_{A} niedriger. Dies entspricht einer Amplitudenumtastung des durch die Sendeantenne L1 fließenden Stromes i_{A} und des durch diesen erzeugten Magnetfeldes.

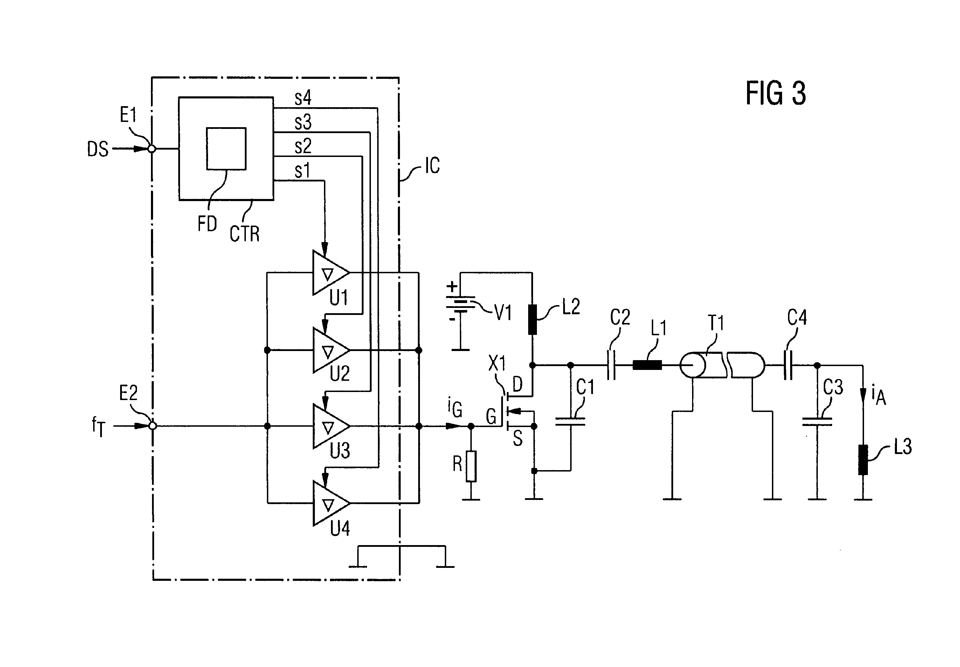

Die Figur 3 zeigt ein Schaltbild eines zweiten Ausführungsbeispiels für eine Vorrichtung zur Ausstrahlung von HF-Signalen gemäß der Erfindung. Die dargestellte Vorrichtung, die in weiten Teilen mit der in Figur 2 gezeigten Vorrichtung übereinstimmt, weist einen Modulator zur Amplitudenumtastung von Eingangssignalen, einen Klasse E-Verstärker und eine Sendeantenne auf, wobei der Klasse E-Verstärker Bestandteil des Modulators ist und wobei weiterhin die Sendeantenne L3 über eine Leitung T1 und ein Anpassnetzwerk C3,C4 mit dem Klasse E-Verstärker verbunden ist.

Der Modulator weist eine digitale integrierte Schaltung IC auf, die einen ersten Eingangsanschluss E1 und einen zweiten Eingangsanschluss E2 hat. Dem ersten Eingangsanschluss E1 wird ein zu modulierendes Datensignal DS zugeführt, welches aus einer Folge von LOW- und HIGH-Pegeln bzw. einer Folge von Nullen und Einsen besteht. An den zweiten Eingangssignalanschluss E2 wird ein Trägerfrequenzsignal f_{T} angelegt, dessen Frequenz beispielsweise 13,56 MHz beträgt.

Das Trägerfrequenzsignal f_{T} wird innerhalb der digitalen integrierten Schaltung IC an vier parallel zueinander geschaltete Gatter U1, U2, U3, U4 geleitet, welche Tristate-Ausgänge der digitalen integrierten Schaltung IC bilden. Die Steuersignale s1, s2, s3, s4 für die Gatter U1, U2, U3, U4 werden von einer Steuereinheit CTR zur Verfügung gestellt, an deren Eingang das zu modulierende Datensignal DS anliegt. Die Steuereinheit CTR erzeugt die Steuersignale s1, s2, s3, s4 in Abhängigkeit von den zu modulierenden Datensignalen DS derart, dass mehr oder weniger dieser Gatter durchlässig sind, wodurch ein jeweils gewünschter Gatestrom i_{G} in den Gateanschluss G eines Schalttransistors X1 fließt.

Der Schalttransistor X1 ist Bestandteil eines Klasse E-Verstärkers und als Feldeffekttransistor realisiert. Der Sourceanschluss S des Feldeffekttransistors X1 ist mit Masse verbunden. Weiterhin ist der Sourceanschluss S über einen Kondensator C1 an den Drainanschluss D des Feldeffekttransistors X1 angeschlossen. Der Drainanschluss D ist ferner über eine Spule L2 mit einer Gleichspannungsquelle V1 verbunden, welche eine Versorgungsgleichspannung zur Verfügung stellt, die kleiner als 6V ist. Vorzugsweise stellt die Gleichspannungsquelle V1 eine Versorgungsgleichspannung von 3,3V zur Verfügung. Diese im Vergleich zu bekannten Lösungen niedrige Versorgungsgleichspannung reicht bei einer Vorrichtung gemäß der Erfindung aus, um HF-Signale von der Schreib-/Leseeinheit eines Identifikationssystems zum mobilen Datenträger zu übertragen. Das Ausstrahlen dieser HF-Signale erfolgt über die Spule L3, die beim gezeigten Ausführungsbeispiel die Sendeantenne bildet und mit dem Klasse E-Verstärker über die Leitung T1 und das Anpassnetzwerk C3, C4 verbunden ist. Der andere Anschluss der Spule L3 liegt auf Masse. Der Drainanschluss D des Feldeffektransistors X1 ist mit der Leitung T1 über einen Kondensator C2 und eine in Reihe dazu geschaltete Spule L1 verbunden.

Bei der in der Figur 3 dargestellten Vorrichtung werden die zu modulierenden Eingangssignale DS einer Amplitudenumtastung unterworfen. Dies erfolgt unter Verwendung mehrerer parallel geschalteter Tristate-Ausgänge eines digitalen integrierten Schaltkreises IC. Diese Tristate-Ausgänge sind einzeln zuschaltbar, abschaltbar oder in einen hochohmigen Zustand schaltbar. Dies erfolgt in Abhängigkeit von den Eingangssignalen mittels einer Steuereinheit CTR, welche Steuersignale für die Tristate-Ausgänge bereitstellt. Diese Ausgänge schalten mit der Trägerfrequenz den MOS-Feldeffekttransistor X1 eines Klasse E-Verstärkers. Dadurch wird in der Sendeantenne L3 ein nahezu harmonischer Strom konstanter Amplitude erzeugt.

Diese konstante Amplitude wird auch durch die Geschwindigkeit des Schaltens des Transistors X1 bestimmt. Je höher diese Geschwindigkeit ist, desto geringer sind die Verluste im Transistor und desto höher ist der durch die Sendeantenne L3 fließende Strom i_{A}.

Zum Schalten des Transistors X1 wird dessen Gate-Kapazität umgeladen. Diese Umladung erfolgt durch den Gatestrom i_{G}, dessen Größe auch vom Innenwiderstand des verwendeten Treibers abhängt. Durch eine Variation des Gatestroms i_{G} werden die Schaltzeiten verändert und dadurch auch der durch die Sendeantenne L3 fließende Strom i_{A}.

Ein niedriger Innenwiderstand kann durch eine gleichzeitige Einschaltung mehrerer der Tristate-Ausgänge der digitalen integrierten Schaltung IC erreicht werden. Eine Erhöhung des Innenwiderstandes kann durch ein Umschalten einiger dieser Tristate-Ausgänge in einen hochohmigen Zustand erreicht werden. Die übrigen Ausgänge arbeiten weiter im Trägerfrequenztakt. Dadurch sinkt der durch die Sendeantenne L3 fließende Strom i_{A}. Die Umschaltung in den hochohmigen Zustand erfolgt im Datentakt mit der Bitfolge der zu modulierenden Eingangssignale, bei denen es sich um einen digitalen Bitstrom handelt.

Sind alle Gatter U1, U2, U3, U4 zugeschaltet, dann fließt ein hoher Strom i_{A} durch die Sendeantenne L3. Sind einige dieser Gatter hochohmig, dann ist der Strom i_{A} niedriger. Dies entspricht einer Amplitudenumtastung des durch die Sendeantenne L3 fließenden Stromes i_{A} und des durch diesen erzeugten Magnetfeldes.

Eine Vorrichtung gemäß der Figur 3 kann insbesondere dann verwendet werden, wenn aus konstruktiven Gründen die Sendeantenne nicht in unmittelbarer Nähe des Modulators bzw. der digitalen integrierten Schaltung IC und des Klasse E-Verstärkers angeordnet sein kann. Das aus den Kondensatoren C3 und C4 bestehenden Anpassnetzwerk dient der Anpassung des Klasse E-Verstärkers und der Antenne an den Ohmschen Widerstand der Leitung T1.

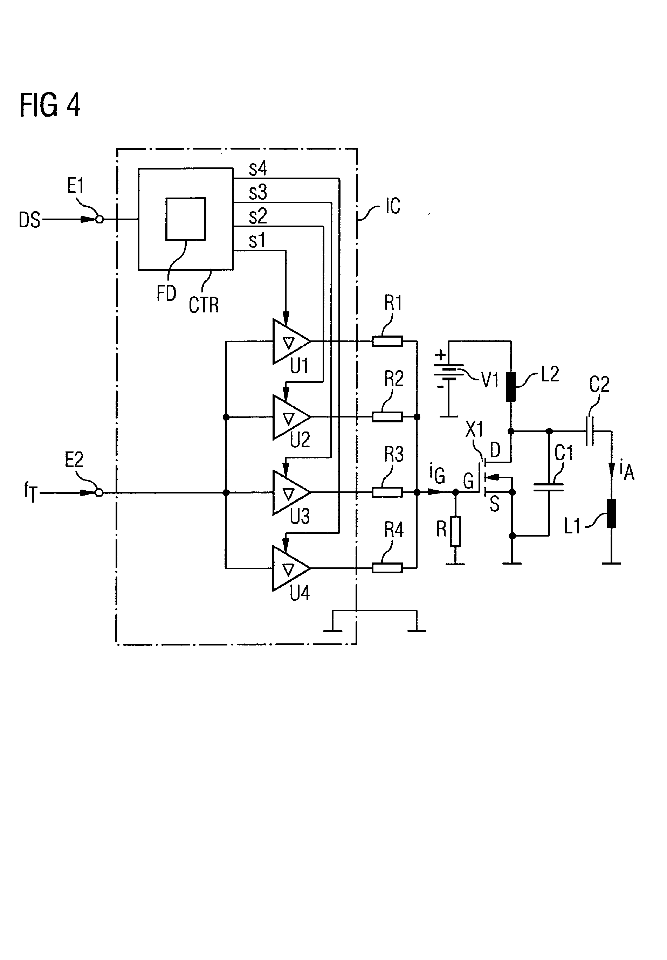

Die Figur 4 zeigt ein Schaltbild eines dritten Ausführungsbeispiels für eine Vorrichtung zur Ausstrahlung von HF-Signalen gemäß der Erfindung. Die dargestellte Vorrichtung, die in weiten Teilen mit der in Figur 2 gezeigten Vorrichtung übereinstimmt, weist einen Modulator zur Amplitudenumtastung von Eingangssignalen, einen Klasse E-Verstärker und eine Sendeantenne auf, wobei der Klasse E-Verstärker und die Sendeantenne Bestandteil des Modulators sind und wobei weiterhin die Sendeantenne Bestandteil des Klasse E-Verstärkers ist.

Der Modulator weist eine digitale integrierte Schaltung IC auf, die einen ersten Eingangsanschluss E1 und einen zweiten Eingangsanschluss E2 hat. Dem ersten Eingangsanschluss E1 wird ein zu modulierendes Datensignal DS zugeführt, welches aus einer Folge von LOW- und HIGH-Pegeln bzw. einer Folge von Nullen und Einsen besteht. An den zweiten Eingangssignalanschluss E2 wird ein Trägerfrequenzsignal f_{T} angelegt, dessen Frequenz beispielsweise 13,56 MHz beträgt.

Das Trägerfrequenzsignal f_{T} wird innerhalb der digitalen integrierten Schaltung IC an vier parallel zueinander geschaltete Gatter U1, U2, U3, U4 geleitet, welche Tristate-Ausgänge der digitalen integrierten Schaltung IC bilden. Die Steuersignale s1, s2, s3, s4 für die Gatter U1, U2, U3, U4 werden von einer Steuereinheit CTR zur Verfügung gestellt, an deren Eingang das zu modulierende Datensignal DS anliegt. Die Steuereinheit CTR erzeugt die Steuersignale s1, s2, s3, s4 in Abhängigkeit von den zu modulierenden Datensignalen DS derart, dass mehr oder weniger dieser Gatter durchlässig sind, wodurch ein jeweils gewünschter Gatestrom i_{G} in den Gateanschluss G eines Schalttransistors X1 fließt. Durch die Ohmschen Widerstände R1, R2, R3, R4, wobei jedem Gatter einer dieser Widerstände in Reihe nachgeschaltet ist, wird eine unterschiedliche Gewichtung erzielt und dadurch die Anzahl der möglichen Gateströme i_{G} des Schalttransistors X1 weiter erhöht.

Der Schalttransistor X1 ist Bestandteil eines Klasse E-Verstärkers und als Feldeffekttransistor realisiert. Der Sourceanschluss S des Feldeffekttransistors X1 ist mit Masse verbunden. Weiterhin ist der Sourceanschluss S über einen Kondensator C1 an den Drainanschluss D des Feldeffekttransistors X1 angeschlossen. Der Drainanschluss D ist ferner über eine Spule L2 mit einer Gleichspannungsquelle V1 verbunden, welche eine Versorgungsgleichspannung zur Verfügung stellt, die kleiner als 6V ist. Vorzugsweise stellt die Gleichspannungsquelle V1 eine Versorgungsgleichspannung von 3,3V zur Verfügung. Diese im Vergleich zu bekannten Lösungen niedrige Versorgungsgleichspannung reicht bei einer Vorrichtung gemäß der Erfindung aus, um HF-Signale von der Schreib-/Leseeinheit eines Identifikationssystems zum mobilen Datenträger zu übertragen. Das Ausstrahlen dieser HF-Signale erfolgt über eine Spule L1, die beim gezeigten Ausführungsbeispiel die Sendeantenne bildet und gleichzeitig Bestandteil des Klasse E-Verstärkers ist. Die Spule ist an den Drainanschluss D des Feldeffekttransistors X1 über einen Kondensator C2 angeschlossen. Der andere Anschluss der Spule L1 liegt auf Masse.

Bei der in der Figur 4 dargestellten Vorrichtung werden die zu modulierenden Eingangssignale DS einer Amplitudenumtastung unterworfen. Dies erfolgt unter Verwendung mehrerer parallel geschalteter Tristate-Ausgänge eines digitalen integrierten Schaltkreises IC. Diese Tristate-Ausgänge sind einzeln zuschaltbar, abschaltbar oder in einen hochohmigen Zustand schaltbar. Dies erfolgt in Abhängigkeit von den Eingangssignalen mittels einer Steuereinheit CTR, welche Steuersignale für die Tristate-Ausgänge bereitstellt. Diese Ausgänge schalten mit der Trägerfrequenz den MOS-Feldeffekttransistor X1 eines Klasse E-Verstärkers. Dadurch wird in der Sendeantenne L1 ein nahezu harmonischer Strom konstanter Amplitude erzeugt.

Diese konstante Amplitude wird auch durch die Geschwindigkeit des Schaltens des Transistors X1 bestimmt. Je höher diese Geschwindigkeit ist, desto geringer sind die Verluste im Transistor und desto höher ist der durch die Sendeantenne L1 fließende Strom i_{A}.

Zum Schalten des Transistors X1 wird dessen Gate-Kapazität umgeladen. Diese Umladung erfolgt durch den Gatestrom i_{G}, dessen Größe auch vom Innenwiderstand des verwendeten Treibers abhängt. Durch eine Variation des Gatestroms i_{G} werden die Schaltzeiten verändert und dadurch auch der durch die Sendeantenne fließende Strom i_{A}.

Ein niedriger Innenwiderstand kann durch eine gleichzeitige Einschaltung mehrerer der Tristate-Ausgänge der digitalen integrierten Schaltung IC erreicht werden. Eine Erhöhung des Innenwiderstandes kann durch ein Umschalten einiger dieser Tristate-Ausgänge in einen hochohmigen Zustand erreicht werden. Die übrigen Ausgänge arbeiten weiter im Trägerfrequenztakt. Dadurch sinkt der durch die Sendeantenne L1 fließende Strom i_{A}. Die Umschaltung in den hochohmigen Zustand erfolgt im Datentakt mit der Bitfolge der zu modulierenden Eingangssignale, bei denen es sich um einen digitalen Bitstrom handelt.

Sind alle Gatter U1, U2, U3, U4 zugeschaltet, dann fließt ein hoher Strom i_{A} durch die Sendeantenne L1. Sind einige dieser Gatter hochohmig, dann ist der Strom i_{A} niedriger. Dies entspricht einer Amplitudenumtastung des durch die Sendeantenne L1 fließenden Stromes i_{A} und des durch diesen erzeugten Magnetfeldes.

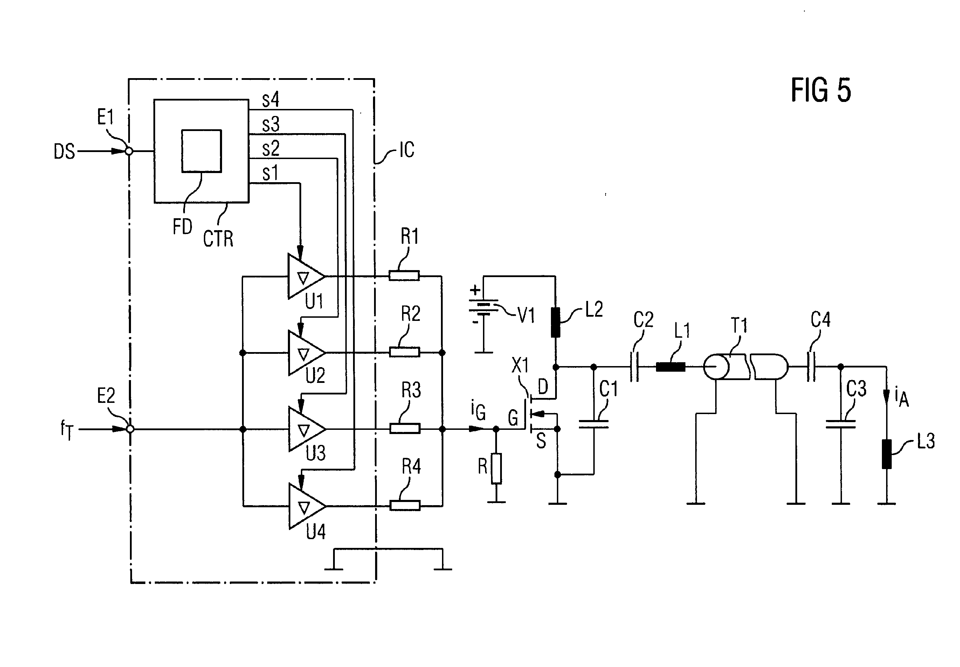

Die Figur 5 zeigt ein Schaltbild eines vierten Ausführungsbeispiels für eine Vorrichtung zur Ausstrahlung von HF-Signalen gemäß der Erfindung. Die dargestellte Vorrichtung, die in weiten Teilen mit der in Figur 2 gezeigten Vorrichtung übereinstimmt, weist einen Modulator zur Amplitudenumtastung von Eingangssignalen, einen Klasse E-Verstärker und eine Sendeantenne auf, wobei der Klasse E-Verstärker Bestandteil des Modulators ist und wobei weiterhin die Sendeantenne L3 über eine Leitung T1 und ein Anpassnetzwerk C3,C4 mit dem Klasse E-Verstärker verbunden ist.

Der Modulator weist eine digitale integrierte Schaltung IC auf, die einen ersten Eingangsanschluss E1 und einen zweiten Eingangsanschluss E2 hat. Dem ersten Eingangsanschluss E1 wird ein zu modulierendes Datensignal DS zugeführt, welches aus einer Folge von LOW- und HIGH-Pegeln bzw. einer Folge von Nullen und Einsen besteht. An den zweiten Eingangssignalanschluss E2 wird ein Trägerfrequenzsignal f_{T} angelegt, dessen Frequenz beispielsweise 13,56 MHz beträgt.

Das Trägerfrequenzsignal f_{T} wird innerhalb der digitalen integrierten Schaltung IC an vier parallel zueinander geschaltete Gatter U1, U2, U3, U4 geleitet, welche Tristate-Ausgänge der digitalen integrierten Schaltung IC bilden. Die Steuersignale s1, s2, s3, s4 für die Gatter U1, U2, U3, U4 werden von einer Steuereinheit CTR zur Verfügung gestellt, an deren Eingang das zu modulierende Datensignal DS anliegt. Die Steuereinheit CTR erzeugt die Steuersignale s1, s2, s3, s4 in Abhängigkeit von den zu modulierenden Datensignalen DS derart, dass mehr oder weniger dieser Gatter durchlässig sind, wodurch ein jeweils gewünschter Gatestrom i_{G} in den Gateanschluss G eines Schalttransistors X1 fließt. Durch die Ohmschen Widerstände R1, R2, R3, R4, wobei jedem Gatter einer dieser Widerstände in Reihe nachgeschaltet ist, wird eine unterschiedliche Gewichtung erzielt und dadurch die Anzahl der möglichen Gateströme i_{G} des Schalttransistors X1 weiter erhöht.

Der Schalttransistor X1 ist Bestandteil eines Klasse E-Verstärkers und als Feldeffekttransistor realisiert. Der Sourceanschluss S des Feldeffekttransistors X1 ist mit Masse verbunden. Weiterhin ist der Sourceanschluss S über einen Kondensator C1 an den Drainanschluss D des Feldeffekttransistors X1 angeschlossen. Der Drainanschluss D ist ferner über eine Spule L2 mit einer Gleichspannungsquelle V1 verbunden, welche eine Versorgungsgleichspannung zur Verfügung stellt, die kleiner als 6V ist. Vorzugsweise stellt die Gleichspannungsquelle V1 eine Versorgungsgleichspannung von 3,3V zur Verfügung. Diese im Vergleich zu bekannten Lösungen niedrige Versorgungsgleichspannung reicht bei einer Vorrichtung gemäß der Erfindung aus, um HF-Signale von der Schreib-/Leseeinheit eines Identifikationssystems zum mobilen Datenträger zu übertragen. Das Ausstrahlen dieser HF-Signale erfolgt über die Spule L3, die beim gezeigten Ausführungsbeispiel die Sendeantenne bildet und mit dem Klasse E-Verstärker über die Leitung T1 und das Anpassnetzwerk C3, C4 verbunden ist. Der andere Anschluss der Spule L3 liegt auf Masse. Der Drainanschluss D des Feldeffektransistors X1 ist mit der Leitung T1 über einen Kondensator C2 und eine in Reihe dazu geschaltete Spule L1 verbunden.

Bei der in der Figur 5 dargestellten Vorrichtung werden die zu modulierenden Eingangssignale DS einer Amplitudenumtastung unterworfen. Dies erfolgt unter Verwendung mehrerer parallel geschalteter Tristate-Ausgänge eines digitalen integrierten Schaltkreises IC. Diese Tristate-Ausgänge sind einzeln zuschaltbar, abschaltbar oder in einen hochohmigen Zustand schaltbar. Dies erfolgt in Abhängigkeit von den Eingangssignalen mittels einer Steuereinheit CTR, welche Steuersignale für die Tristate-Ausgänge bereitstellt. Diese Ausgänge schalten mit der Trägerfrequenz den MOS-Feldeffekttransistor X1 eines Klasse E-Verstärkers. Dadurch wird in der Sendeantenne L3 ein nahezu harmonischer Strom konstanter Amplitude erzeugt.

Diese konstante Amplitude wird auch durch die Geschwindigkeit des Schaltens des Transistors X1 bestimmt. Je höher diese Geschwindigkeit ist, desto geringer sind die Verluste im Transistor und desto höher ist der durch die Sendeantenne L3 fließende Strom i_{A}.

Zum Schalten des Transistors X1 wird dessen Gate-Kapazität umgeladen. Diese Umladung erfolgt durch den Gatestrom i_{G}, dessen Größe auch vom Innenwiderstand des verwendeten Treibers abhängt. Durch eine Variation des Gatestroms i_{G} werden die Schaltzeiten verändert und dadurch auch der durch die Sendeantenne L3 fließende Strom i_{A}.

Ein niedriger Innenwiderstand kann durch eine gleichzeitige Einschaltung mehrerer der Tristate-Ausgänge der digitalen integrierten Schaltung IC erreicht werden. Eine Erhöhung des Innenwiderstandes kann durch ein Umschalten einiger dieser Tristate-Ausgänge in einen hochohmigen Zustand erreicht werden. Die übrigen Ausgänge arbeiten weiter im Trägerfrequenztakt. Dadurch sinkt der durch die Sendeantenne L3 fließende Strom i_{A}. Die Umschaltung in den hochohmigen Zustand erfolgt im Datentakt mit der Bitfolge der zu modulierenden Eingangssignale, bei denen es sich um einen digitalen Bitstrom handelt.

Sind alle Gatter U1, U2, U3, U4 zugeschaltet, dann fließt ein hoher Strom i_{A} durch die Sendeantenne L3. Sind einige dieser Gatter hochohmig, dann ist der Strom I_{A} niedriger. Dies entspricht einer Amplitudenumtastung des durch die Sendeantenne L1 fließenden Stromes i_{A} und des durch diesen erzeugten Magnetfeldes.

Eine Vorrichtung gemäß der Figur 5 kann insbesondere dann verwendet werden, wenn aus konstruktiven Gründen die Sendeantenne nicht in unmittelbarer Nähe des Modulators bzw. der digitalen integrierten Schaltung IC und des Klasse E-Verstärkers angeordnet sein kann. Das aus den Kondensatoren C3 und C4 bestehenden Anpassnetzwerk dient der Anpassung des Klasse E-Verstärkers und der Sendeantenne an den Ohmschen Widerstand der Leitung T1.

Die Erfindung betrifft nach alledem eine Vorrichtung zur Ausstrahlung von HF-Signalen, welche einen Modulator zur Amplitudenumtastung von Eingangssignalen, einen Klasse E-Verstärker als Sendeverstärker und eine Sendeantenne aufweist. Der Klasse E-Verstärker hat einen hohen Wirkungsgrad und benötigt nur eine niedrige Versorgungsgleichspannung, die beispielsweise 3,3V beträgt. Die Vorrichtung gemäß der Erfindung benötigt im Vergleich zu bekannten Vorrichtungen zur Ausstrahlung von HF-Signalen weniger Bauelemente zu ihrer Realisierung. Die Sendeantenne kann Bestandteil des Klasse E-Verstärkers sein, wodurch die Anzahl der benötigten Bauelemente weiter reduziert wird, oder über eine Leitung und ein Anpassnetzwerk an den Klasse E-Verstärker angeschlossen sein.

Der durch die Antenne fließende Strom kann während des Betriebes in Abhängigkeit von den Eingangssignalen durch Softwarebefehle über die Zahl der aktiven Digital-Ausgänge der integrierten digitalen Schaltung in einfacher Weise eingestellt werden. Dadurch kann die gewünschte Amplitudenumtastung erreicht und auch der Ausgangsstrom verändert werden. Eine Integration der beanspruchten Vorrichtung in ein digitales Umfeld, z. B. ein FPGA, ist problemlos möglich. Es wird kein schnellerer Takt als die Trägerfrequenz benötigt.

Wie aus der obigen Beschreibung hervorgeht, kann mittels der erfindungsgemäßen Vorrichtung in Abhängigkeit von der Ansteuerung der Tristate-Ausgänge bzw. Gatter sowohl eine Amplitudenumtastung mit einem Modulationsgrad, d. h. zwei Pegeln des Ausgangsstroms, als auch eine Amplitudenumtastung mit mehr als einem Modulationsgrad, d. h. mehr als zwei Pegeln des Ausgangstroms durchgeführt werden.

Eine vorteilhafte Weiterbildung der Erfindung besteht darin, die in der digitalen integrierten Schaltung IC angeordnete Steuereinheit CTR mit einem Flankendetektor FD auszustatten und die Ausgangssignale des Flankendetektors bei der Ermittlung der Steuersignale s1, s2, s3, s4 zu berücksichtigen. Dadurch kann eine Versteilerung fallender und steigender Flanken der Hüllkurve erreicht werden.

Eine vorteilhafte Weiterbildung der Erfindung besteht darin, die in der digitalen integrierten Schaltung IC angeordnete Steuereinheit CTR mit einem Flankendetektor FD auszustatten und die Ausgangssignale des Flankendetektors bei der Ermittlung der Steuersignale s1, s2, s3, s4 zu berücksichtigen. Dadurch kann eine Versteilerung fallend und steigender Flanken der Hüllkurve erreicht werden.

Bei allen oben beschriebenen Ausführungsbeispielen ist zwischen dem Gate G des Schalttransistors X1 und Masse ein hochohmiger Ohmscher Widerstand R vorgesehen. Dieser hat beim regulären Betrieb der jeweiligen Vorrichtung keinen Einfluss. Nur dann, wenn die digitale integrierte Schaltung IC infolge eines Fehlers oder beim Ein- und Ausschalten der Stromversorgung ohne Stromversorgung ist, sperrt dieser Ohmsche Widerstand R den Schalttransistor X1 und verhindert ein offenes Gate mit unbestimmtem Pegel.

## Patentansprüche

1. Vorrichtung zur Ausstrahlung von HF-Signalen, welche einen Modulator zur Amplitudenumtastung von Eingangssignalen, einen Klasse E-Verstärker und eine Sendeantenne aufweist.

2. Vorrichtung nach Anspruch 1, **dadurch gekennzeichnet, dass** der Klasse E-Verstärker einen Schalttransistor (X1) aufweist, der in Abhängigkeit von den Eingangssignalen mit unterschiedlicher Leistung angesteuert wird.

3. Vorrichtung nach Anspruch 1 oder 2, **dadurch gekennzeichnet, dass** der Schalttransistor ein Feldeffekttransistor ist.

4. Vorrichtung nach Anspruch 3, **dadurch gekennzeichnet, dass** der Drainansschluss (D) des Feldeffekttransistors (X1) über eine Spule (L2) mit einer Gleichspannungsquelle (V1) verbunden ist.

5. Vorrichtung nach einem der vorhergehenden Ansprüche, **dadurch gekennzeichnet, dass** die Eingangssignale (DS) dem Klasse E-Verstärker über eine digitale integrierte Schaltung (IC) zugeführt werden, welche mehrere parallele Tristate-Ausgänge (U1, U2, U3, U4) aufweist, die in Abhängigkeit von den Eingangssignalen individuell zuschaltbar, abschaltbar und in den hochohmigern Zustand schaltbar sind.

6. Vorrichtung nach Anspruch 5, **dadurch gekennzeichnet, dass** die digitale integrierte Schaltung (IC) eine Steuereinheit (CTR) aufweist, welche Steuersignale (s1,s2,s3,s4) für die Tristate-Ausgänge (U1,U2,U3,U4) generiert.

7. Vorrichtung nach Anspruch 6, **dadurch gekennzeichnet, dass** die digitale integrierte Schaltung (IC) einen Flankendetektor (FD) aufweist und die Steuereinheit (CTR) die Steuersignale (s1,s2,s3,s4) für die Tristate-Ausgänge (U1,U2,U3,U4) in Abhängigkeit von in den Eingangssignalen enthaltenen Flanken generiert.

8. Vorrichtung nach einem der Ansprüche 5 - 7, **dadurch gekennzeichnet, dass** die Steuereinheit (CTR) die Steuersignale (s1,s2,s3,s4) für die Tristate-Ausgänge (U1,U2,U3,U4) derart generiert, dass eine Amplitudenumtastung mit mehr als einem Modulationsgrad erfolgt.

9. Vorrichtung nach einem der vorhergehenden Ansprüche, **dadurch gekennzeichnet, dass** die Sendeantenne von einer Spule (L1) des Klasse E-Verstärkers gebildet wird (Figur 2; Figur 4).

10. Vorrichtung nach einem der Ansprüche 1 - 8, **dadurch gekennzeichnet, dass** der Klasse E-Verstärker über eine Leitung (T1) und ein Anpassnetzwerk (C3,C4) mit der Sendeantenne (L3) verbunden ist (Figur 3; Figur 5) .

11. Vorrichtung nach einem der vorhergehenden Ansprüche, **dadurch gekennzeichnet, dass** sie Bestandteil eines Identifikationssystems (I) ist, welches ein Schreiblesegerät (1) und einen mobilen Datenträger (4) aufweist.

12. Vorrichtung nach Anspruch 11, **dadurch gekennzeichnet, dass** die mit dem Drainanschluss (D) des Feldeffekttransistors (X1) über eine Spule (L2) verbundene Gleichspannungsquelle (V1) eine Versorgungsspannung bereitstellt, die kleiner gleich 6V ist.

13. Vorrichtung nach Anspruch 12, **dadurch gekennzeichnet, dass** die Versorgungsspannung 3,3V beträgt.

14. Vorrichtung nach einem der Ansprüche 5 - 13, **dadurch gekennzeichnet, dass** in Reihe zu den Tristate-Ausgängen (U1,U2,U3,U4) jeweils ein Ohmscher Widerstand (R1,R2,R3,R4) geschaltet ist, wobei diese Ohmsche Widerstände unterschiedliche Widerstandswerte aufweisen.
